# EUROPEAN PATENT SPECIFICATION

(11) **EP 4 388 310 B1**
(45) Date of publication and mention of the grant of the patent: **25.11.2026**
(21) Application number: 22859028.7
(22) Date of filing: 16.08.2022
(51) Int. Cl.: G01N 30/60, B01D 15/22

(54) **CHROMATOGRAPHIC BED INSERT**
CHROMATOGRAFISCHER BETTEINSATZ
INSERT DE LIT CHROMATOGRAPHIQUE

(30) Priority: 16.08.2021 US 202163233396 P
(43) Date of publication of application: 26.06.2024
(73) Proprietor: Merck Patent GmbH, 64293 Darmstadt (DE)
(72) Inventor: BAILEY, Daniel M., Greenland, New Hampshire 03840 (US); STROEHLEIN, Guido, 27367 Hassendorf (DE)
(74) Representative: TBK
(86) International application number: PCT/US2022/040433
(87) International publication number: WO 2023/023032

(56) References cited:
- JP-A- 2004 122 083
- US-A- 6 090 278
- US-A1- 2009 321 338
- US-A1- 2009 321 356
- US-A1- 2013 306 563
- US-A1- 2019 255 462
- US-B1- 6 270 674

## Description

### BACKGROUND OF THE INVENTION

### FIELD OF THE INVENTION

The present disclosure relates to a to a chromatographic bed insert, a chromatographic device which includes the insert and a chromatographic medium, and a method of chromatographic separation.

### DISCUSSION OF THE BACKGROUND

Over the past several decades chromatography has been widely used for the industrial scale preparation of large proteins such as antibodies and other large complex proteins, commonly referred to as 'biologics'. Stickel, et al., (Biotechnol. Prog. 17 (2001) 755-751) outline complexities in the scale up of these chromatographic operations and report on pressure-flow relationships for packed beds of compressible media at various scales. Broadly, chromatography is a process of separating or resolving one or more solutes being transported by one or more fluids. Typically, a chromatography column is utilized in which a hollow vertically disposed cylindrical housing is filled or loaded with resin or media having adsorptive properties. The column is a so-called "packed bed" and may be formed by loading a slurry of the media into the column and then consolidating into a bed. Once packed, liquid mobile phases are passed over or through the bed to selectively resolve the one or more solutes. The resin or media is selected based on the differential separation of the one or more solutes. One characteristic of most chromatographic media is that it is compressible. The compressible nature media has led to the advancement of chromatography column devices capable of axially compressing chromatographic chambers. This axial compression is used to form the bed from a suspended slurry and compact the bed beyond a zero-compression state so that no headspace forms at the bed top.

There are, however, detrimental aspects of increased bed compression, particularly at a commercial production scale. Overall, small diameter beds experience limited compaction of media and therefore, correspondingly higher permeabilities than more compacted larger diameter beds of the same heights. In production, larger diameter beds are more preferred, thus there is a need to obviate or avoid these and other detrimental aspects associated with compression of the chromatographic media.

There have been several attempts to diminish these detrimental aspects. U.S. Patent No. 3,298,527 to Wright proposes a modified flow cylinder with increased wetted perimeter. U.S. Publication No. 2019/0255462 A1 to Blaschyk relates to an insert for a chromatography column having radial arms forming a centrally segmented chamber via the connected arms. U.S. Patent No. 5,124,133 to Schoenock proposes a column construction having plates vertically extending through the bed to effect flow straightening by preventing lateral flow. U.S. Patent No. 5,770,061 to Heikkilä, et al. relates to a chromatographic column which has at least two zones in the vertical direction and are defined by vertical walls offset from one another and having different geometrics. Gerontes, et al, in Chemical Engineering Science 129 (2015) 25-33 discusses the uses of inserts to improve flow rates to improve production rates.

Further, a chromatographic bed insert according to the preamble of claim 1 is known from US 2013/306563 A1.

These potential solutions, however, do not obviate all of the problems related to compaction of the media and fluid flow through a chromatographic device, while also maintaining efficient chromatographic performance.

It is the object of the present disclosure to provide a chromatographic bed insert that may limit compaction of the chromatographic media and may stabilize the media by reducing the hydraulic radius to provide additional wetted perimeter within the device. It is a further aim of the present invention to provide a chromatographic bed insert that provides minimal volume displacement and minimal interference to the volumetric flux through the device. Moreover, the insert may minimize the intersections of wall support features and minimize divisions of the device into regions that are obstructed from ideal fluidic communication.

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

### SUMMARY OF THE INVENTION

The above object is solved with a chromatographic bed insert having the features of claim 1 and a method according to claim 19. Further embodiments are laid down in the dependent claims.

### BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.
Figs. 1A-1C depict a chromatography bed insert according to an exemplary embodiments of the present disclosure, where Fig. 1A shows a side-on view, Fig. 1B shows a top-down view, and Fig. 1C shows an angled view.
Figs. 2A-2C depict a chromatography bed insert according to an exemplary embodiment of the present disclosure, where Fig. 2A shows a side-on view, Fig. 2B shows a top-down view, and Fig. 2C shows an angled view.
Fig. 3A depicts a base having a square grid pattern of openings, according to an exemplary embodiment of the present disclosure.
Fig. 3B depicts a base having a radially symmetric pattern of openings, according to an exemplary embodiment of the present disclosure.
Fig. 3C depicts a base having a hexagonal grid pattern of openings, according to an exemplary embodiment of the present disclosure.
Fig. 4A depicts a chromatography bed insert with a base having a square grid pattern and projection members having a circular cross section, according to an exemplary embodiment of the present disclosure.
Fig. 4B shows an enlarged view of the exemplary chromatography bed insert shown in Fig. 4A.
Fig. 4C shows a side-view of the exemplary chromatography bed insert shown in Fig. 4A.
Fig. 5A depicts a chromatography bed insert with a base having a square grid pattern and projection members having an elliptical cross section, according to an exemplary embodiment of the present disclosure.
Fig. 5B shows an enlarged view of the exemplary chromatography bed insert shown in Fig. 5A in which an alternating pattern of projection members is visible.
Figs. 6A and 6B depict a chromatography bed insert having the raised edge present on the base members, according to an exemplary embodiment of the present disclosure.
Figs. 7A-7D depict chromatography bed inserts having comprising two or more layers, according to an exemplary embodiment of the present disclosure.
Figs. 8A and 8B show schematic illustrations of chromatography bed inserts with labeled parameters used in Tables 1-5.
Fig. 9 depicts a chromatographic device which includes a chromatography bed insert, according to an exemplary embodiment of the present disclosure.
Fig. 10 is a photograph of a chromatographic device which includes a chromatography bed insert, according to an exemplary embodiment of the present disclosure.

### DETAILED DESCRIPTION OF THE INVENTION

In the following description, it is understood that other embodiments may be utilized and structural and operational changes may be made without departure from the scope of the present embodiments disclosed herein.

### Definitions

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). Reference throughout this document to "one embodiment", "certain embodiments", "an embodiment", "an implementation", "an example" or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

As used herein, the terms "optional" or "optionally" means that the subsequently described event(s) can or cannot occur or the subsequently described component(s) may or may not be present (e.g., 0 wt.%).

### Chromatography Bed Insert

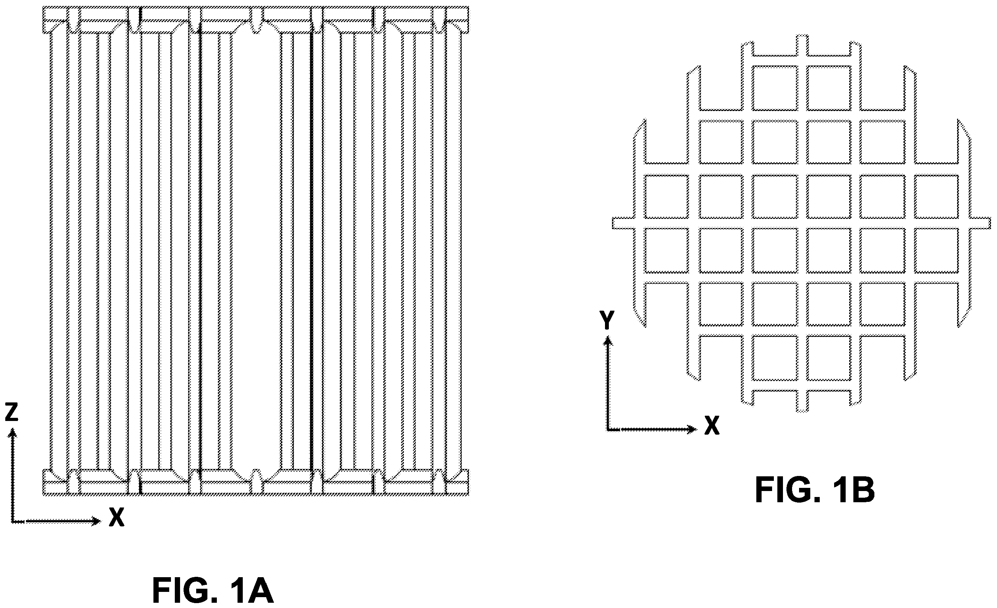

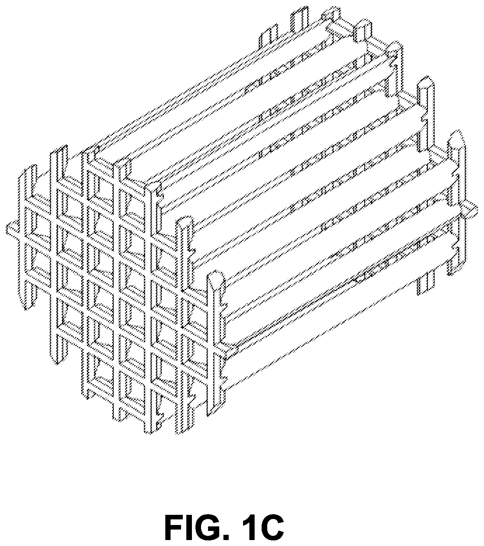

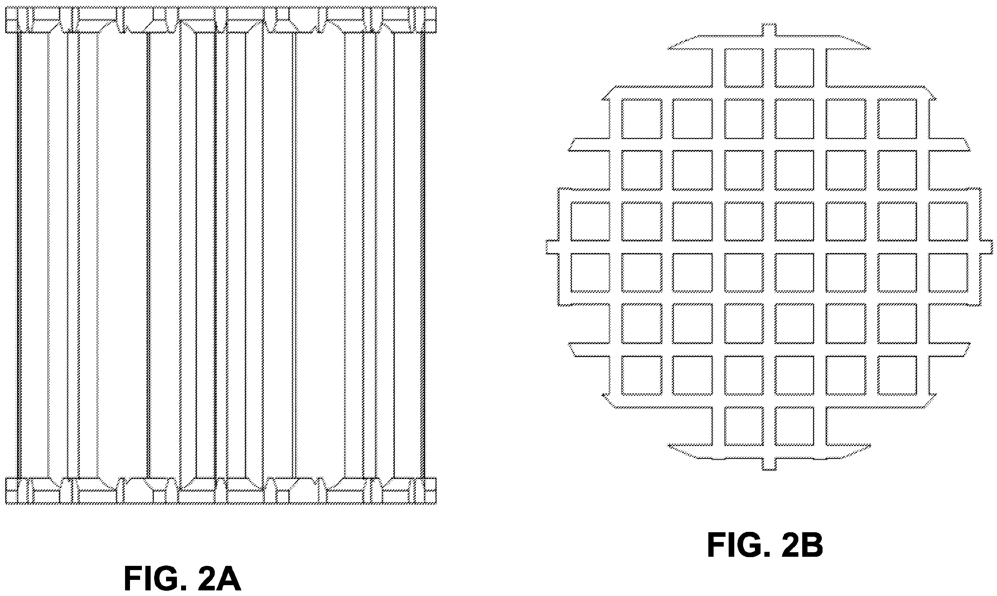

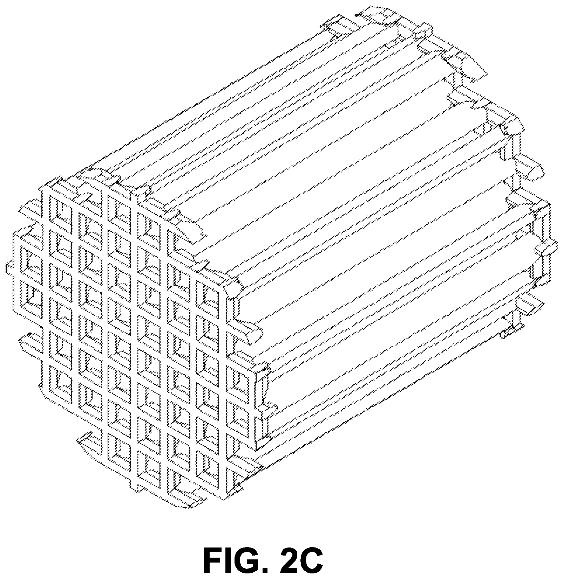

According to a first aspect, the present disclosure relates to a chromatographic bed insert (herein after referred to as an "insert"). The insert comprises a base comprising a plurality of openings and an array of projection members, the projection members being disposed on the base and projecting substantially perpendicular to the base. A chromatographic bed is shown in Figs. 1A-1C and Figs. 2A-2C, according to exemplary embodiments of the present disclosure.

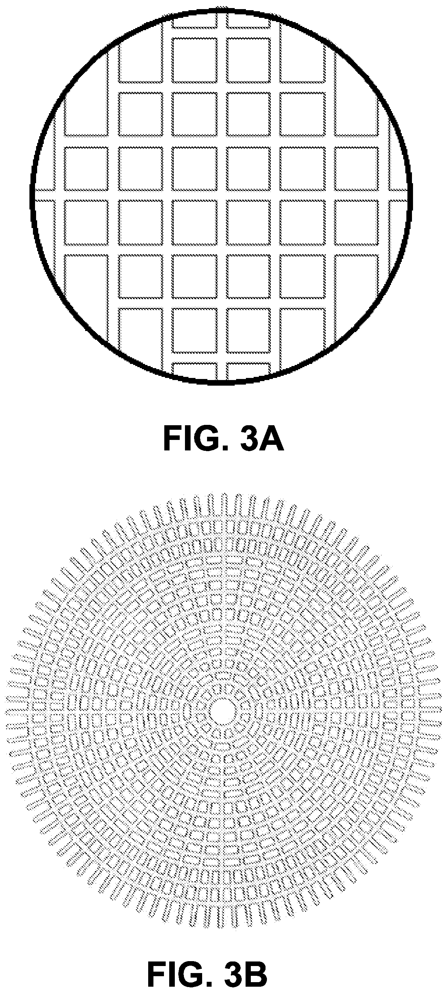

In general, the base can have any suitable shape. For example, in some embodiments, the base has a circular disc shape. That is, the base is substantially circular profile when viewed from above, having a base diameter and a base thickness. A circular such base may be particularly advantageous to fit or be compatible with conventional chromatography columns. Typical conventional chromatography columns have a circular cross-section. Matching the profile of the base with the cross-section of a conventional chromatography column may be advantageous for ensuring, for example, a proper orientation of the insert, a seal between the insert and the conventional chromatography column, a secure placement of the insert (e.g., one which is substantially free of insert movement during use), or a combination of these. In other examples, the base may be a substantially elliptical profile, a polygonal profile such as a triangle, square, rectangle, rhombus, parallelogram, pentagon, hexagon, heptagon, octagon, and the like, or any suitable other profile known to one of ordinary skill in the art. According to the invention, the plurality of openings is formed in the base. That is, the base comprises a contiguous shape of a base material in which the openings are formed or disposed. In some embodiments, the base comprises a plurality of base members arranged to form the plurality of openings. That is, the openings are formed from spaces between the base members placed in a suitable arrangement. Such base members may be connected in any suitable manner, such as being joined, abutted, overlapped, or the like. In some embodiments, the base comprises a first layer of base members which comprises base members arranged in a first direction (e.g., in an X direction as per Fig. 1B) and a second layer of base members which comprises base members arranged in second direction (e.g., in a Y direction as per Fig. 1B). In some embodiments, the base comprises a single layer of base members arranged to form the openings. In some embodiments, the base may have a base perimeter member. Such a perimeter member can be a base member which forms a solid perimeter of the base. Fig. 3A shows an example of a base which contains a perimeter member. In some embodiments, the base may be devoid of such a perimeter member. The exemplary embodiment depicted in Figs. 1A-1C shows an insert which lacks such a perimeter member.

The base members can have any suitable shape known to one of ordinary skill in the art. The shape of the base members can be defined by a cross-section. Examples of suitable cross-sectional shapes the base members may have include, but are not limited to irregular shapes, circles, ellipses, squares, rectangles, rhombuses, parallelograms, pentagons, hexagons, heptagons, octagons, and the like or combinations thereof.

In general, the openings may have any suitable shape known to one of ordinary skill in the art. For example, the openings may be circular, elliptical, polygonal, irregularly-shaped, or combinations thereof. In some embodiments, the openings are circular openings formed in the base. In the exemplary embodiment shown in Fig. 1B, the openings are square where complete (i.e., having an opening perimeter formed by the base or base members) and irregular where incomplete (i.e., not having an opening perimeter formed by the base or base members).

According to the invention, the openings are arranged to form a pattern. In general, the openings may be arranged to form any suitable pattern known to one of ordinary skill in the art. In some embodiments, the openings are arranged to form a pattern which is radially symmetric. An example of such a radially symmetric pattern is shown in Fig. 3B. In this exemplary radially symmetric pattern, the base comprises base members arranged radially outward from a base center and circular base members arranged circumferentially at various distances from the base center. In this example, the openings do not have a uniform size or a uniform shape. It may be noted that the exemplary base shown in Fig. 3B does not have a perimeter member and contains both complete openings and incomplete openings.

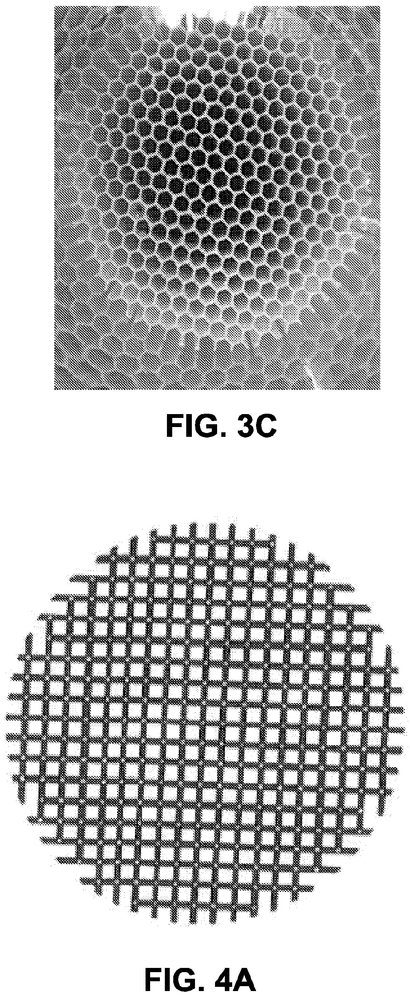

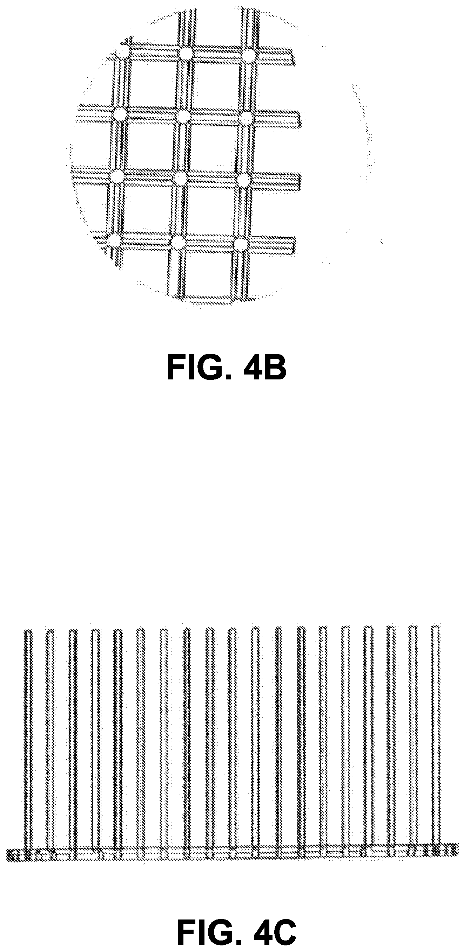

In some embodiments, the openings are arranged to form a grid. The grid may be formed from the base members. In general, the grid may have any suitable shape or combination of shapes which is capable of tessellating to cover a plane. Examples of such suitable shapes include, but are not limited to triangles, squares, rectangles, rhombuses, hexagons, a mixture of squares and triangles, a mixture of hexagons and triangles, a mixture of hexagons, squares, and triangles, a mixture of octagons and squares, a mixture of dodecagons and triangles, a mixture of dodecagons, hexagons, and squares, and irregular shapes capable of tessellating to cover a plane. The openings of the grid may be of uniform size or may be of non-uniform size. The grid can comprise complete and incomplete openings as described above. An exemplary embodiment of a base having a square grid of openings is shown in Figs. 3B and 4A-4B. An exemplary embodiment of a base having a hexagonal grid of openings is shown in Fig. 3C.

The projection members are disposed on the base and project or extend in a direction substantially perpendicular to the base (e.g., in a Z direction as in Fig. 1A). In general, the projection members may be any suitable shape known to one of ordinary skill in the art. The shape of the projection members can be defined by a cross-section. Examples of suitable cross-sectional shapes the base members may have include, but are not limited to irregular shapes, circles, ellipses, squares, rectangles, rhombuses, parallelograms, pentagons, hexagons, heptagons, octagons, and the like, or combinations thereof.

The projection members may have a size which is defined by a projection member height which refers to a maximum distance in a direction perpendicular to the base (i.e., a Z-direction as shown in Fig. 1A), a first projection member thickness (e.g., a length), and a second projection member thickness (e.g., a width). For projection members which have a square cross-section, the first projection member thickness (length), and the second projection member thickness (width) are equal. For projection members which have a circular cross-section, the length and width are both equal and are the diameter of the circular cross-section. For projection members which have an elliptical cross-section, the first projection member thickness (length) refers to a maximum length, and a second projection member thickness (width) refers to a maximum width. In some embodiments, the projection members have a ratio of the first projection member thickness to the second projection member thickness of 1:1 to 20:1, preferably 1:1 to 10:1, preferably 1:1 to 7:1, preferably 1.5:1 to 6.5:1, preferably 2:1 to 5:1, preferably 2.25:1 to 4.75:1, preferably 2.5:1 to 4.5:1, preferably 2.75:1 to 4.25:1, preferably 3:1 to 4:1. In some embodiments, the projection members have a rectangular cross section and an aspect ratio of 1.25:1 to 7:1, preferably 1.5:1 to 6.5:1, preferably 2:1 to 5:1, preferably 2.25:1 to 4.75:1, preferably 2.5:1 to 4.5:1, preferably 2.75:1 to 4.25:1, preferably 3:1 to 4:1. In some embodiments, the projection members have an elliptical cross section and an aspect ratio of 1.25:1 to 7:1, preferably 1.5:1 to 6.5:1, preferably 2:1 to 5:1, preferably 2.25:1 to 4.75:1, preferably 2.5:1 to 4.5:1, preferably 2.75:1 to 4.25:1, preferably 3:1 to 4:1.

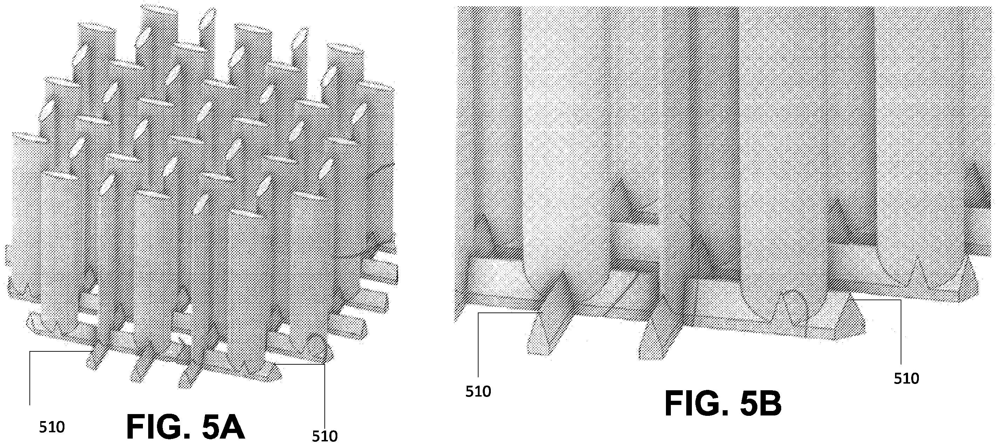

In general, the projection members may be disposed on the base in any suitable arrangement. The projection members are positioned so as to not obstruct the openings present in the base. In some embodiments, the projection members are attached to or disposed on the base members. The projection members may, in general, be attached to or disposed on any part of the base members. In some embodiments, the projection members are attached to or disposed on the base at locations where base members connect or intersect. An example of this is shown in Figs. 4A-4C. These figures show projection members having a circular cross-section disposed at intersections or junctions of base members which form a square grid. The arrangement shown in the exemplary embodiments depicted in Figs. 4A-4C results in the projection members being arranged in a square grid. Another example is shown in Figs. 5A-6B. These figures show projection members having an elliptical cross-section disposed at intersections or junctions of base members which form a square grid. In these the exemplary embodiments, the projection members have a length which is oriented substantially parallel to the base members. Such an orientation may be advantageous for structural stability or for preventing obstruction of the openings.

The projection members may be arranged in any suitable arrangement. Such a projection member arrangement may be the same as or may be different from the arrangement of the base members. For example, if the base members form a hexagonal grid, the projection members may be arranged to form a hexagonal arrangement or a non-hexagonal arrangement. In some embodiments, the projection members are disposed on the base such that the array of projection members forms a grid. In some embodiments, the projection members are disposed on the base such that the array of projection members forms a pattern which is radially symmetric.

There is no specific limit on a number or density of projection members which may be present. Figs. 1A-1C depict an exemplary inset having a lower projection member density and a closer spaced arrangement of smaller openings compared with the exemplary inset shown in Figs 2A-2C. Projection member density may refer to a number of projection members per unit area encompassed by the base.

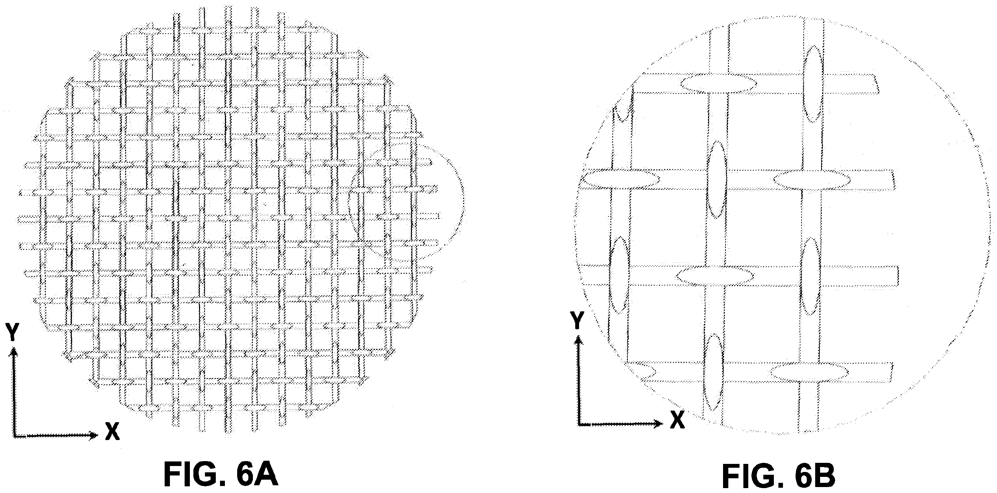

In embodiments which have projection members having an asymmetric cross-section (e.g., rectangular or elliptical), the projection members may be arranged in an alternating arrangement. Such an arrangement may have the projection members arranged such that a first set of projection members is oriented such that the length is oriented in a first orientation (e.g., along an X-direction as shown in Figs. 6A-6B) and a second set of projection members is oriented such that the length is oriented in a second orientation (e.g., along a Y-direction as shown in Figs. 6A-6B). Such a first set of projection members can be any suitable number of projection members or any suitable fraction of a total number of projection members present. The alternating may occur with any suitable pattern or frequency. For example, adjacent projection members may alternate moving along an X-direction, a Y-direction, or both. An example of alternating in both the X- and Y-directions is shown in Figs. 6A and 6B.

In some embodiments, the projection members each comprise a fixed end which is connected to the base and a free end. The free end, being the end which is at an opposite extent of the projection member from the fixed end connected to the base, is not connected to the base. A projection member may be connected to any number of other projection members. Such a connection may be formed by any suitable structure, for example struts or base members from the base of another layer described below. The struts may be arranged in any suitable arrangement and be oriented in any suitable direction. For example, there may be struts which are disposed between adjacent projection members and be oriented in a direction in an X-Y plane (using the labeled axes shown in Fig. 1B). In another example, there may be struts which are disposed between adjacent projection members and be oriented in in a diagonal direction such that the strut is oriented with a Z-axis component to a vector describing the orientation (using the labeled axes shown in Fig. 1A). In some embodiments, a projection member may be unconnected to another projection member.

In some embodiments, the insert comprises a cap. The cap may be similar to the base as described above. That is, the cap comprises a plurality of openings. The cap may be similar to or different from, in any aspect, the corresponding base of the insert. The exemplary embodiments depicted in Figs. 1A-1C and 2A-2C show inserts which have caps. In some embodiments, the cap is connected to the projection members. In some embodiments, the cap is not connected to the projection members. In some embodiments, the cap is connection to a first set of projection members and is not connected to a second set of projection members. Projection members connected to the cap may be the same as or different from projection members which are not connected to the cap.

In some embodiments, the base and/or cap comprises base members which comprise a raised edge. The raised edge is oriented in a direction substantially similar to the projection members. For example, a raised edge on a base member can be oriented toward the free end of the projection members and/or cap as appropriate. The raised edge can have any suitable profile or cross-section. An exemplary embodiment having the raised edge is shown in Figs. 5A and 5B. The raised edge is shown as structural element 510 in these figures. In this exemplary embodiment, the raised edge has a substantially triangular cross-section. These triangular raised edges are disposed on substantially rectangular base members. The resulting overall cross-section is an irregular pentagon having a "house shape". The raised edge may be advantageous for directing a flow of material though a chromatographic device which contains the insert.

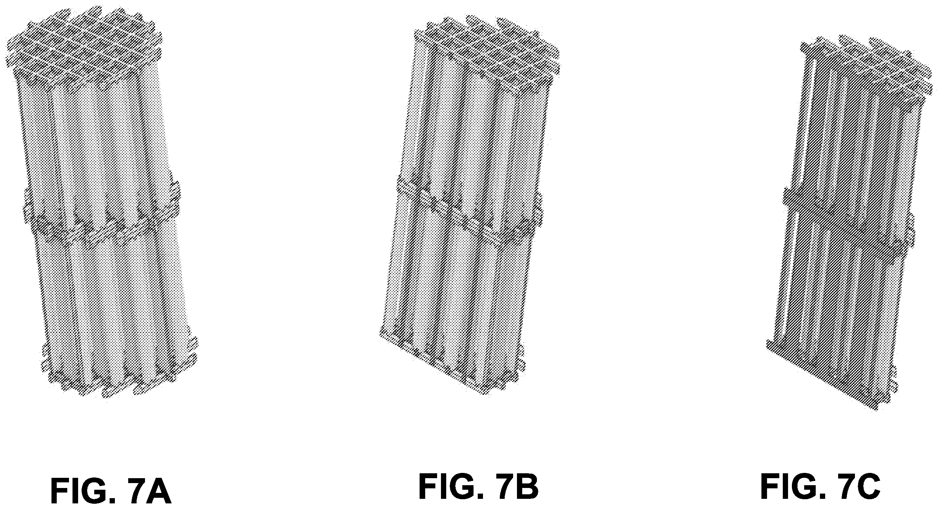

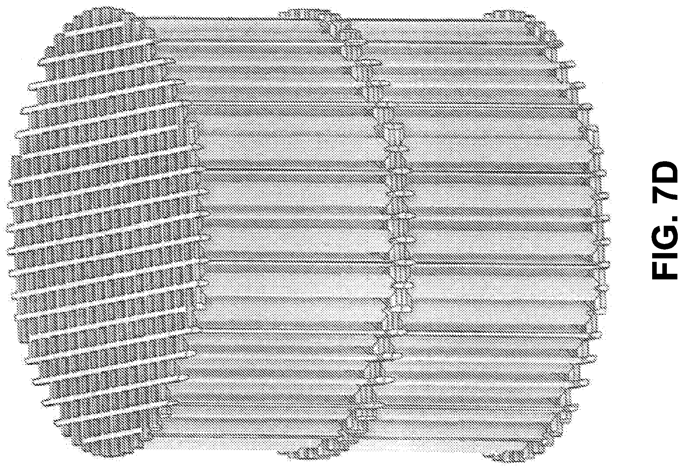

In some embodiments, the insert comprises two or more layers. Each of these layers comprises a base and an array of projection members as described above. The layers can be arranged to form a stack in which the base of an upper layer is located on top of the array of projection members of a lower layer. In general, there is no limit to the number of layers which may be present in an insert. In some embodiments, the projection members of a lower layer are connected to the base of an upper layer. In some embodiments, the projection members of a lower layer do not comprise a free end. In some embodiments, the projection members of a lower layer are not connected to the base of an upper layer. In some embodiments, the projection members of a lower layer comprise a free end. Such an arrangement may form a gap between the base of the upper lay and the projection members of the lower layer. In some embodiments, the inset comprises interlayer support members which are disposed between the bases and connect each base to at least one other base. The interlayer support members may be substantially the same as the projection members or may be different. Such differences can be in any suitable parameter, for example length, width, aspect ratio, cross-sectional shape, etc., as described above. In general, the same description which applies to the projection members may apply to the interlayer support members. In some embodiments, the interlay support members have a greater thickness and/or width compared to the projection members. Such increased thickness and/or width may be advantageous for providing additional structural support to the insert. Figs. 7A-7D depict an insert having two layers, according to an exemplary embodiment of the present disclosure.

In some embodiments, a lower array of projection members associated with a lower layer is aligned with an upper array of projection members associated with an upper layer. Such alignment may be an alignment of position, of orientation, or both. That is, the projection members may be oriented and positioned such that the upper layer projection members occupy a similar portion in the X-Y plane (using the coordinate system defined in Fig. 1B) as the projection members of the lower layer.

In some embodiments, the cap of one layer forms the base of another layer. That is, the same material or structure(s) present which are connected to a set of projection members which are disposed on a first base and form a first layer are connected to a set of projection members disposed on the material or structure and form a second layer.

In general, there is no restriction on what material or materials may be used to construct the insert. Examples of suitable materials which may be used include, but are not limited to glasses such as soda lime glass, borosilicate glass, fused quartz, tempered glass, and laminated glass; polymers such as polycarbonate, polystyrene, polypropylene, polyethylene, polyvinylidene difluoride (PVDF), polytetrafluoroethylene (PTFE), polymethylpentene, polyvinyl chloride (PVC), polysulfone, polyethylene terephthalate, polyester, polyamide, polyetheramide, and blends or copolymers thereof; metals such as stainless steel, aluminum, titanium, alloys thereof, and the like. Preferred materials which may be used are polypropylene, polyethylene, and stainless steel. Polymers may be polymer-comprising composites or reinforced polymers. For example, the polymers may be reinforced with fibers such as glass fibers, wood fibers, carbon fibers, or aramid fibers; inorganic particulates; or mixtures thereof. Such materials may be combined in any suitable manner. For example, different parts of the insert can be constructed from or comprise different materials. In another example, the same part of the insert can be constructed from or comprise different materials, such as a metal coated with a polymer.

The insert has a displacement volume (%D) which is less than 50%, preferably less than 45%, preferably less than 40%, preferably less than 35%, preferably less than 30%, preferably less than 27.5%, preferably less than 25%, preferably less than 22.5%, preferably less than 20%, preferably less than 18%, preferably less than 16% of a volume defined by the chromatographic bed insert. That is, based on an area encompassed by the base and a height of the projection members, and if applicable, the cap, the inset occupies less than the percentage described above. In some embodiments, the insert has a displacement volume (%D) which is at least 5%, preferably at least 7.5%, preferably at least 10%, preferably at least 11%, preferably at least 11.5%, preferably at least 12%, preferably at least 12.5%, preferably at least 13%, preferably at least 14%, preferably at least 15%, preferably at least 15.5% of a volume defined by the chromatographic bed insert. The remaining volume defined by the chromatographic bed insert is defined by the openings and spaces between the projection members. In some embodiments, the volume defined by the openings and spaces between the projection members is greater than 50%, preferably greater than 52.5%, preferably greater than 55%, preferably greater than 57.5%, preferably greater than 60%, preferably greater than 62.5%, preferably greater than 65%, preferably greater than 67.5%, preferably greater than 70%, preferably greater than 72.5%, preferably greater than 75%, preferably greater than 77.5%, preferably greater than 80%, preferably greater than 82.5%, preferably greater than 85%, preferably greater than 84% of a volume defined by the chromatographic bed insert. In some embodiments, the volume defined by the openings and spaces between the projection members is less than 95%, preferably less than 92.5%, preferably less than 90%, preferably less than 89%, preferably less than 88.5%, preferably less than 88%, preferably less than 87.5%, preferably less than 87%, preferably less than 86.5%, preferably less than 86%, preferably less than 85.5%, preferably less than 85%, preferably less than 84.5% of a volume defined by the chromatographic bed insert.

The chromatographic bed insert is configured to reduce the hydraulic radius (R_{H}) of a chromatography bed comprising the chromatographic bed insert by at least 25%, preferably by at least 30%, preferably by at least 35%, preferably by at least 40%, preferably by at least 45%, preferably by at least 50%, preferably by at least 55%, preferably by at least 60%, preferably by at least 65%, preferably by at least 70%, preferably by at least 75%, preferably by at least 77.5%, preferably by at least 80%, preferably by at least 82.5%, preferably by at least 85%, preferably by at least 87.5%, preferably by at least 90%, preferably by at least 91%, preferably by at least 92%, preferably by at least 93%, preferably by at least 94%, preferably by at least 95%, preferably by at least 95.5%, preferably by at least 96%, preferably by at least 96.5%, preferably by at least 97%, preferably by at least 97.5%, preferably by at least 98%, preferably by at least 98.5%, preferably by at least 99%, preferably by at least 99.5%, compared to a corresponding chromatography bed which does not comprise the chromatographic bed insert.

As used herein, "corresponding chromatography bed which does not comprise the chromatographic bed insert" refers to a chromatography bed which is substantially the same as another chromatography bed which contains the insert described above, except for the absence of said insert. Such a chromatography bed has substantially the same dimensions and chromatographic material including material type, particle size, packing density, or other suitable measure. Such a chromatography bed may have substantially the same amount of chromatographic material, but such material not be displaced by the volume taken up by the material of the insert.

### Chromatographic Device

The present disclosure also relates to a chromatographic device comprising the insert described above and a chromatographic medium.

In general, the chromatographic medium may be any suitable chromatographic medium known to one of ordinary skill in the art. In some embodiments, the chromatographic medium comprises packed particles. In some embodiments, the particles are at least one selected from the group consisting of a synthetic resin particle, a polysaccharide particle, and an inorganic material particle. In some embodiments, the particles are polysaccharide particles. In preferred embodiments, the particles are synthetic resin particles. Such particles may be suitable for any type of chromatographic separation, such as size exclusion chromatography, ion exchange chromatography, affinity chromatography, or combinations thereof. The particles may be functionalized. Such functionalization can involve or result in the presence of suitable functional groups and/or moieties on the surface of the particle. For example, the particles may be functionalized with an antigen, an antibody, an enzyme, a substrate, a receptor, or a ligand. Such functionalization may be advantageous for separation or purification of biological analytes or from mixtures of biological origin.

In some embodiments, the corresponding chromatographic device which does not comprise the chromatographic bed insert has a hydraulic radius (R_{H}) of at least 1 cm, preferably 1 to 5 cm, preferably 1.5 to 4.5 cm, preferably 1.75 to 4.25 cm, preferably 2 to 4 cm, preferably 2.25 to 3.75 cm, preferably 2.5 to 3.5 cm and the chromatographic device has a corrected hydraulic radius (R_{HC}) of less than 1 cm, preferably less than 0.95 cm, preferably less than 0.90 cm, preferably less than 0.85 cm, preferably less than 0.80 cm, preferably less than 0.75 cm, preferably less than 0.70 cm, preferably less than 0.65 cm, preferably less than 0.60 cm, preferably less than 0.55 cm, preferably less than 0.50 cm, preferably less than 0.45 cm, preferably less than 0.40 cm, preferably less than 0.35 cm, preferably less than 0.30 cm, preferably less than 0.25 cm, preferably less than 0.20 cm, preferably less than 0.15 cm, preferably less than 0.10 cm, preferably less than 0.05 cm. In some embodiments, the corresponding chromatographic device which does not comprise the chromatographic bed insert has a hydraulic radius (R_{H}) of 1 to 5 cm and the chromatographic device has a hydraulic radius (R_{HC}) of less than 0.75 cm.

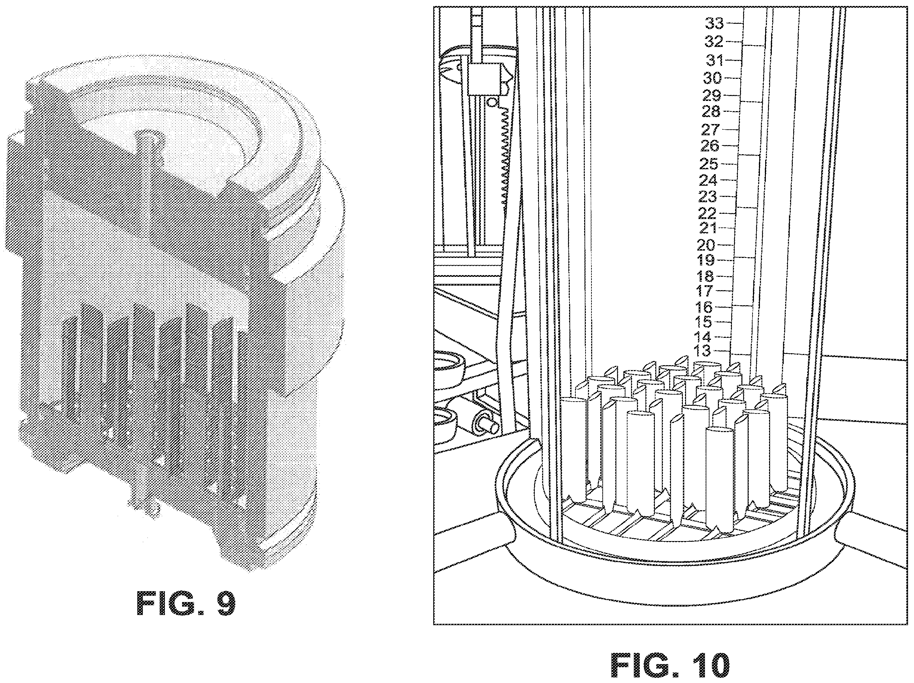

Exemplary chromatographic devices are shown in Figs. 9 and 10.

In some embodiments, the chromatographic device has a compression factor of 1.05 to 1.5, preferably 1.08 to 1.4, preferably 1.1 to 1.3, preferably 1.13 to 1.2. The compression factor is a ratio of the volume occupied by an amount of chromatographic medium in a loose state to the volume occupied by the same amount of chromatographic medium after packing to form the chromatographic device.

In some embodiments, the chromatographic device has a permeability of 1,000 to 10,000 cm²/bar-hour, preferably 1250 to 9750 cm²/bar-hour, preferably 1500 to 9500 cm²/bar-hour, preferably 1750 to 9250 cm²/bar-hour, preferably 2000 to 9000 cm²/bar-hour, preferably 2250 to 8750 cm²/bar-hour, preferably 2500 to 8500 cm²/bar-hour, preferably 2750 to 8250 cm²/bar-hour, preferably 3000 to 8000 cm²/bar-hour, preferably 3250 to 7750 cm²/bar-hour, preferably 3500 to 7500 cm²/bar-hour. Generally, the permeability refers to a solvent permeability. Such a solvent may be any suitable solvent known to one of ordinary skill in the art.

### Method of Chromatographic Separation

The present disclosure also relates to a method of chromatographically separating constituents of a liquid mixture. The method involves passing the liquid mixture and an eluting solvent through the chromatographic device described above and collecting fractions comprising at least one selected from the group consisting of a constituent of the liquid mixture and the eluting solvent.

In general, the passing may be performed by any suitable technique or with any suitable parameters known to one of ordinary skill in the art. Example of such parameters include flow rate, pressure, concentration, and temperature. For example, the liquid mixture and/or the eluting solvent may be passed using a gravity-fed mechanism. In another example, the liquid mixture and/or the eluting solvent may be passed though the application of pressure. The method may be a method of liquid chromatography. Liquid chromatography (LC) refers to a process of selective retention of one or more components of a fluid solution as the fluid uniformly percolates through a column of a finely divided substance (a chromatographic medium), or through capillary passageways. The retention results from the distribution of the components of the mixture between one or more stationary phases and the bulk fluid, (i.e., mobile phase), as this fluid moves relative to the stationary phase(s). "Liquid chromatography" includes, without limitation, reverse phase liquid chromatography (RPLC), high performance liquid chromatography (HPLC), ultra-high performance liquid chromatography (UHPLC), supercritical fluid chromatography (SFC), and ion-exchange chromatography.

As used herein, the term "HPLC" or "high performance liquid chromatography" refers to liquid chromatography in which the degree of separation is increased by forcing the mobile phase under pressure through a stationary phase, typically a densely packed column.

As used herein, the term "UHPLC" or "ultra-high performance liquid chromatography" refers to a liquid chromatography technique similar to HPLC except the operating pressures are higher than HPLC (e.g., about 100 MPa vs. about 40 MPa), the columns are typically smaller in diameter, and resolution can be greater.

Ion-exchange chromatography separates molecules based on their respective charged groups. Ion-exchange chromatography retains analyte molecules on a column based on coulombic (ionic) interactions. Molecules undergo electrostatic interactions with opposite charges on the stationary phase matrix. The stationary phase typically consists of an immobile matrix that contains charged ionizable functional groups or ligands. To achieve electroneutrality, these inert charges couple with exchangeable counterions in the solution. Ionizable molecules that are to be purified compete with these exchangeable counterions for binding to the immobilized charges on the stationary phase. These ionizable molecules are retained or eluted based on their charge. Initially, molecules that do not bind or bind weakly to the stationary phase are first to wash away. Altered conditions are needed for the elution of the molecules that bind to the stationary phase. The concentration of the exchangeable counterions, which competes with the molecules for binding, can be increased or the pH can be changed. A change in pH affects the charge on the particular molecules and, therefore, alters binding. Additionally, concentration of counterions can be gradually varied to separate ionized molecules. This type of elution is called gradient elution. On the other hand, step elution can be used in which the concentration of counterions is varied in one step.

Where a numerical limit or range is stated herein, the endpoints are included. Also, all values and subranges within a numerical limit or range are specifically included as if explicitly written out.

Obviously, numerous modifications and variations of the present invention are possible in light of the above teachings. It is therefore to be understood that, within the scope of the appended claims, the invention may be practiced otherwise than as specifically described herein.

### EXAMPLES

### Corrected Hydraulic Radius (R_{HC})

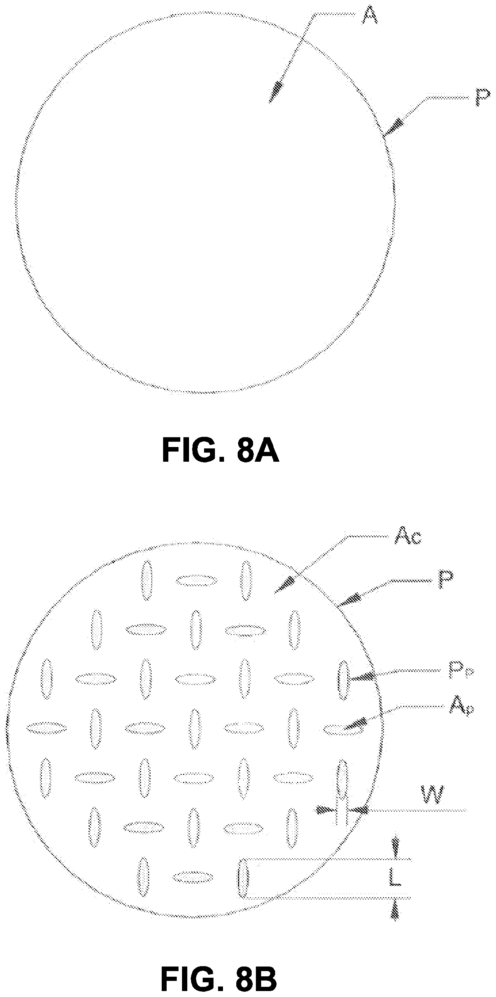

The following example provides exemplary calculations for corrected hydraulic radius R_{HC} using the following variables and referring to FIG. 8A and FIG. 8B.
A = area normal to flow [cm²]
P = wetted perimeter normal to flow [cm]
R_{H} = Hydraulic Radius [cm]
A_{P} = cross-sectional area of individual projection member normal to flow [cm²]
P_{P} = perimeter of projection member cross-section normal to flow [cm]
N = number of projection members [#]
A_{I} = cross-sectional area of the insert [cm²]
P_{I} = perimeter of the insert [cm]
A_{C} = corrected cross-sectional area normal to flow [cm²]
P_{C} = corrected wetted perimeter normal to flow [cm]
R_{HC} = corrected Hydraulic Radius [cm]
L = maximum length of projection member cross-section [cm]
W = maximum width of a projection member cross-section [cm]
Aspect Ratio = ratio of L to W
%D = percent displacement of initial hydraulic chamber volume by insert [%]
CF = Compression Factor

For an area A normal to flow with a perimeter P as shown in FIG. 8A, the hydraulic radius is defined as: ${R}_{H} = A / P$ (Equation 1)

The addition on wetted perimeter via non intersecting projection members of area A_{P} and a wetted perimeter P_{P} in a quantity of N as shown in FIG. 8B may significantly modify both the cross-sectional area and wetted perimeter of the hydraulic chamber as shown by the equations below: ${A}_{I} = N * {A}_{P}$ (Equation 2) ${P}_{I} = N * {P}_{P}$ (Equation 3) ${A}_{C} = A - N * {A}_{P} = A - {A}_{I}$ (Equation 4) ${P}_{C} = P + N * {P}_{P} = P + {P}_{I}$ (Equation 5)

Addition of projection members may reduce the wetted cross-sectional area since the projection members are solid and not open to flow. Addition of projection members may be additive to the wetted perimeter since each projection member provides additional wetted perimeter.

The corrected hydraulic radius R_{HC} is then defined as: ${R}_{HC} = {A}_{C} / {P}_{C} = \left(A-N*{A}_{P}\right) / \left(P+N*{P}_{P}\right)$ (Equation 6)

The percent displacement of the projection members is of interest to be reduced since area occupied by the projection member reduces the overall hydraulic chamber volume available for chromatographic media. Percent displacement by the projection members of an insert in a hydraulic chamber at any given cross-section normal to flow can be defined as: $% D = N * {A}_{P} / A * 100 %$ (Equation 7)

Effective insert designs will reduce both R_{HC} and %D, preferably to values of less than 1 cm, preferably less than 0.75 cm, preferably less than 0.5 cm and less than 50%, preferably less than 37.5%, preferably less than 25%. As demonstrated in the equations provided, increasing P_{P} while decreasing A_{P} achieves both objectives. Additionally, increasing N will reduce R_{HC} but increase %D.

It is known that wall effect have can have an effect on packed beds at 25 cm diameter (R_{H} = 6.5 cm) or less, with increase effects observed at 2.5 cm diameter (R_{H} = 0.625 cm) or less. (*See,* Physical and Functional Properties of Chromatography Media - A Down Scale Study, E. Hennson, Uppsala University thesis.) Therefore, combinations of A_{P}, P_{P}, N that may provide an R_{HC} of ≤ 1 cm for hydraulic chambers of a cross-sectional areas, A, that may be of 50 cm² or more as desired.

The projection member profile shape and overall area are the primary parameters of the P_{P}/A_{P} relationship. A means to increase the ratio of P_{P}/A_{P} is to increase the aspect ratio of the projection member shape, as defined by: $AR = L / W$ (Equation 8)

In the case of a rectangular projection member profile, the A_{P} and P_{P} of a projection member cross-section can be defined as: ${A}_{P} = L * W$ (Equation 9) ${P}_{P} = 2 * L + 2 * W$ (Equation 10)

The P_{P}/A_{P} relationship can be expressed in terms of AR and A_{P} as: ${P}_{P} / {A}_{P} = 2 * \left(1+1/AR\right) * Sqrt \left(AR/{A}_{P}\right)$ (Equation 11)

Equation 11 can then be used to show that for any constant A_{P}, the P_{P}/A_{P} ratio always increases with increasing AR when considering AR must always be equal to or greater than one.

A second means of increasing the P_{P}/A_{P} ratio is by reducing the A_{P} for a projection member cross-section. As show in Tables 1, 2, and 3 the P_{P}/A_{P} ratio increases as A_{P} is reduced.

The function of the A_{P}/P_{P} is also defined by the geometric shape of the projection members, such as circular vs rectangular vs elliptical or convoluted. Tables 1, 2, and 3 show a comparison of structural parameters for insets with projection members having circular, elliptical, and rectangular projection member profiles respectively. In general, ellipses are found to maximize P_{P} / A_{P} at any given aspect ratio for non-convoluted shapes, but at increasingly small projection member cross-sections (< 0.5 cm²) the P_{P}/A_{P} ratio becomes increasingly large regardless of the actual projection member cross-section profile.

**Table 1: Calculated structural properties for an insert having projection members with a circular cross-section**

| Circular Profile | | | |
|---|---|---|---|
| | P_{P} | A_{P} | |
| Diameter | Perimeter | Area | P_{P}/A_{P} |
| cm | cm | cm² | cm⁻¹ |
| 0.0035 | 0.011 | 0.00001 | 1143 |
| 0.035 | 0.11 | 0.001 | 114 |
| 0.113 | 0.35 | 0.01 | 35 |
| 0.357 | 1.12 | 0.1 | 11 |
| 1.131 | 3.55 | 1.00 | 4 |
| 0.2 | 0.63 | 0.031 | 20 |
| 0.25 | 0.79 | 0.049 | 16 |
| 0.3 | 0.94 | 0.071 | 13 |
| 0.35 | 1.10 | 0.096 | 11 |
| 0.4 | 1.26 | 0.126 | 10 |
| 0.5 | 1.57 | 0.196 | 8.0 |
| 0.6 | 1.88 | 0.28 | 6.7 |
| 0.7 | 2.20 | 0.38 | 5.7 |
| 0.8 | 2.51 | 0.50 | 5.0 |
| 0.9 | 2.83 | 0.64 | 4.4 |
| 1.0 | 3.14 | 0.79 | 4.0 |
| 1.25 | 3.93 | 1.23 | 3.2 |
| 1.5 | 4.71 | 1.77 | 2.7 |
| 2 | 6.28 | 3.14 | 2.0 |
| 2.5 | 7.85 | 4.91 | 1.6 |
| 5 | 15.71 | 19.63 | 0.8 |
| 6 | 18.85 | 28.27 | 0.7 |
| 10 | 31.42 | 78.54 | 0.4 |
| 14 | 43.98 | 153.94 | 0.29 |

**Table 2: Calculated structural properties for an insert having projection members with an elliptical cross-section.**

| Elliptical Profile | | | | | |
|---|---|---|---|---|---|
| L | W | AR | Perimeter | Area | P_{P}/A_{P} |
| Length | Width | Aspect Ratio | cm | cm² | cm⁻¹ |
| Cm | cm | | Perimeter | Area | P_{P}/A_{P} |
| 0.0072 | 0.0018 | 4.000 | 0.016 | 0.000010 | 1619.7 |
| 0.0224 | 0.0056 | 4.000 | 0.051 | 0.00010 | 520.6 |
| 0.072 | 0.018 | 4.000 | 0.165 | 0.0010 | 162.0 |
| 0.224 | 0.056 | 4.000 | 0.513 | 0.010 | 52.1 |
| 0.716 | 0.179 | 4.000 | 1.640 | 0.10 | 16.3 |
| 2.24 | 0.56 | 4.000 | 5.129 | 1.0 | 5.2 |
| 0.5 | 0.125 | 4.000 | 1.145 | 0.049 | 23.3 |
| 0.5 | 0.25 | 2.000 | 1.242 | 0.098 | 12.6 |
| 0.375 | 0.125 | 3.000 | 0.878 | 0.037 | 23.9 |
| 1 | 0.25 | 4.000 | 2.290 | 0.196 | 11.7 |
| 2 | 0.5 | 4.000 | 4.580 | 0.785 | 5.8 |
| 2 | 0.5 | 4.000 | 4.580 | 0.785 | 5.8 |
| 2.5 | 0.25 | 10.000 | 5.581 | 0.491 | 11.4 |
| 2.5 | 0.125 | 20.000 | 5.561 | 0.245 | 22.7 |
| 0.25 | 0.25 | 1.000 | 0.785 | 0.049 | 16.0 |

**Table 3: Calculated structural properties for an insert having projection members with a rectangular cross-section.**

| Rectangular Profile | | | | | |
|---|---|---|---|---|---|
| L | W | AR | Perimeter | Area | P_{P}/A_{P} |
| Length | Width | Aspect Ratio | cm | cm² | cm⁻¹ |
| cm | cm | | Perimeter | Area | P_{P}/A_{P} |
| 0.02 | 0.01 | 2.000 | 0.06 | 0.00020 | 300.0 |
| 0.064 | 0.02 | 4.000 | 0.16 | 0.0010 | 156.3 |
| 0.08 | 0.02 | 4.000 | 0.20 | 0.002 | 125.0 |
| 0.12 | 0.03 | 4.000 | 0.30 | 0.004 | 83.3 |
| 0.16 | 0.04 | 4.000 | 0.40 | 0.006 | 62.5 |
| 0.4 | 0.10 | 4.000 | 1.00 | 0.040 | 25.0 |
| 0.44 | 0.11 | 4.000 | 1.107 | 0.049 | 22.6 |
| 0.75 | 0.15 | 5.000 | 1.80 | 0.113 | 16.0 |
| 0.8 | 0.20 | 4.000 | 2.00 | 0.160 | 12.5 |
| 1.6 | 0.40 | 4.000 | 4.00 | 0.640 | 6.3 |
| 2.4 | 0.60 | 4.000 | 6.00 | 1.440 | 4.2 |
| 3.2 | 0.80 | 4.000 | 8.00 | 2.560 | 3.1 |
| 4 | 1.00 | 4.000 | 10.00 | 4.00 | 2.5 |
| 8 | 2.00 | 4.000 | 20.00 | 16.00 | 1.3 |
| 0.22 | 0.22 | 1.000 | 0.888 | 0.049 | 18.0 |

Table 4 is a comparison of various sized hydraulic chambers with a circular cross-section normal to flow and the R_{HC} based on the addition of a multitude of non-intersecting projection members. In this comparison the Aspect Ratio of the rectangular projection member cross-section was set to 5, and shows the N (number of projection members) required to obtain R_{HC} < 0.5 and a %D of ≤ 25%. For both circular and rectangular projection member cross-sections, this generally requires a projection member cross-section of < 1 cm², sometimes < 0.5 cm², and oftentimes < 0.25 cm². It is noted that, in an embodiment in which non-intersecting supports that may lay outside this design are extreme aspect ratio (AR ≥ 10) projection members within large hydraulic areas of 500 cm² or more. Such projection members may yield R_{HC} of interest with %D < 25%, but even in these cases the maximum width of the projection member cross-section would be < 0.5 cm, and oftentimes ≤ 0.25 cm.

**Table 4: Calculated properties of a chromatographic device having a circular profile and including an insert having projection members with a rectangular cross-section.**

| Cross-Section Normal to Flow | | | Projection member Cross-Section: Rectangle | | | | |
|---|---|---|---|---|---|---|---|
| Circular Profile | | | Aspect Ratio: 5 | | | | |
| D | A | P | A_{P} | P_{P} | N | R_{HC} | %D |
| cm | cm² | cm | cm² | cm | # | cm | |
| 4.4 | 15.2 | 13.8 | 0.0500 | 1.20 | 25 | 0.3183 | 8% |
| 4.4 | 15.2 | 13.8 | 0.0500 | 1.20 | 50 | 0.1720 | 16% |
| 8.0 | 50 | 25.1 | 0.1000 | 1.70 | 100 | 0.2054 | 20% |
| 8.0 | 50 | 25.1 | 0.0500 | 1.20 | 225 | 0.1313 | 23% |
| 11.3 | 100 | 35.4 | 0.0500 | 1.20 | 300 | 0.2149 | 15% |
| 11.3 | 100 | 35.4 | 0.1000 | 1.70 | 200 | 0.2134 | 20% |
| 17.8 | 250 | 56.0 | 0.0500 | 1.20 | 775 | 0.2142 | 16% |
| 17.8 | 250 | 56.0 | 0.0500 | 1.20 | 975 | 0.1641 | 20% |
| 25.2 | 500 | 79.3 | 0.0500 | 1.20 | 1150 | 0.3032 | 12% |
| 25.2 | 500 | 79.3 | 0.0500 | 1.20 | 1800 | 0.1831 | 18% |
| 35.7 | 1000 | 112.1 | 0.1500 | 2.08 | 1000 | 0.3880 | 15% |
| 35.7 | 1000 | 112.1 | 0.1000 | 1.70 | 2000 | 0.2282 | 20% |
| 79.8 | 5000 | 250.7 | 0.0500 | 1.20 | 11500 | 0.3149 | 12% |
| 79.8 | 5000 | 250.7 | 0.1000 | 1.70 | 10000 | 0.2323 | 20% |
| 79.8 | 5000 | 250.7 | 0.2500 | 2.68 | 5000 | 0.2774 | 25% |

Table 5 shows a comparison of cylindrical hydraulic chambers with uncorrected versus corrected hydraulic radii to demonstrate potential achievable effects of the disclosure in which ${R}_{H} = A / P$
A = Wetted Area
P = Wetted Perimeter

**Table 5: Comparison of R_{H} (no insert) and R_{HC} (with insert) for a cylindrical chromatographic device.**

| Cylindrical Device Parameters | | | No Insert | With Insert |
|---|---|---|---|---|
| D | A | P | R_{H} | RH_{C} |
| cm | cm² | cm | cm | cm |
| 0.500 | 0.20 | 1.57 | 0.125 | |
| 1.00 | 0.79 | 3.14 | 0.250 | |
| 2.00 | 3.14 | 6.28 | 0.500 | |
| 5.00 | 19.63 | 15.71 | 1.25 | 0.148 |
| 7.00 | 38.48 | 21.99 | 1.75 | |
| 30.0 | 706.86 | 94.25 | 7.50 | |
| 40.0 | 1256.64 | 125.66 | 10.0 | |
| 45.0 | 1590.43 | 141.37 | 11.3 | 0.168 |
| 50.0 | 1963.50 | 157.08 | 12.5 | |
| 60.0 | 2827.43 | 188.50 | 15.0 | |
| 80.0 | 5026.55 | 251.33 | 20.0 | |
| 100 | 7853.98 | 314.16 | 25.0 | 0.170 |
| 200 | 31415.93 | 628.32 | 50.0 | |

Table 6 shows various parameters of chromatographic devices which contain different inserts and chromatographic media, according to exemplary embodiments of the present disclosure. The compressibility ratio (CF) is the initial volume of the medium divided by the final filled volume of the medium comprising the packed bed. In this case, used the volume before and after each particle was packed in the column and passed through the liquid multiple times. Typically, compression factor is measured by introducing the particles into a chromatographic device, measuring the volume of unpacked particles, then packing using a packing fluid flowrate of 100 to 150 cm/hr and measuring the volume of packed particles. Permeability is defined as the ratio of linear velocity to the pressure drop per unit height of packed bed. Typically, permeability measured in a range where the relationship between linear velocity and pressure drop is proportional. Under such conditions, permeability is to a first approximation constant, but an average value over the range of measurement is typically reported.
A = Cross-sectional area of device [cm²]
P = wetted perimeter normal to flow [cm]
R_{H} = Hydraulic Radius [cm]
A_{C} = corrected cross-sectional area normal to flow [cm²]
P_{C} = corrected wetted perimeter normal to flow [cm]
R_{HC} = corrected Hydraulic Radius [cm]
L = maximum length of projection member cross-section [cm]
W = maximum width of a projection member cross-section [cm]
Aspect Ratio = ratio of L to W
%D = percent displacement of initial hydraulic chamber volume by insert [%]
CF = Compression Factor

**Table 6: Parameters of Chromatographic Devices**

| | Bead Material | Bead diameter (µm) | Projection Member Density (cm²) | Length (cm) | Width (cm) | Aspect Ratio | A (cm²) | P (cm) | R_{H} (cm) | Ac (cm²) | **Pc** (cm) | R_{HC} (cm) | %D | CF | Permeability (cm²/bar-hr) |
|---|---|---|---|---|---|---|---|---|---|---|---|---|---|---|---|
| Example 1 (Fig.5A-5B) | Synthetic resin | 55 | 0.6 | 10.0 | 2.50 | 4.0 | 78.54 | 31.42 | 2.5 | 72.27 | 126.79 | 0.57 | 7.98 | 1.20 | 4800 |
| Example 2 (Fig. 3C) | Synthetic resin | 55 | - | - | - | - | 78.54 | 31.42 | 2.5 | 65.47 | 523.79 | 0.13 | 16.64 | 1.11 | 7500 |
| Example 3 (Fig. 7A-7C) | Synthetic resin | 55 | 4.0 | 5.0 | 1.25 | 4.0 | 15.21 | 13.82 | 1.1 | 12.23 | 78.37 | 0.156 | 19.60 | 1.12 | 7050 |
| Example 4 (Fig. 7A-7C) | Synthetic resin | 55 | 2.4 | 5.0 | 1.25 | 4.0 | 15.21 | 13.82 | 1.1 | 13.17 | 57.00 | 0.23 | 13.40 | 1.08 | 7400 |
| Example 5 (Fig. 7A-7C) | Agarose. | 85 | 4.0 | 5.0 | 1.25 | 4.0 | 15.21 | 13.82 | 1.1 | 12.23 | 78.37 | 0.16 | 19.60 | 1.13 | 3460 |

## Claims

1. A chromatographic bed insert, comprising:
a base comprising a plurality of openings; and
an array of projection members positioned on the base and projecting substantially perpendicular to the base, **characterized in that** the plurality of openings form a grid or a radially symmetrical pattern; and the array of projection members is positioned on the base so as to not obstruct the openings present;
wherein
the chromatographic bed insert has a displacement volume (%D) which is less than 50% of a volume defined by the chromatographic bed insert, and
the chromatographic bed insert is configured to reduce a hydraulic radius (R_{H}) of a chromatography bed comprising the chromatographic bed insert by at least 25% compared to a corresponding chromatography bed which does not comprise the chromatographic bed insert.

2. The chromatographic bed insert of claim 1, wherein
the projection members comprise a free end and a fixed end which is connected to the base.

3. The chromatographic bed insert of claim 1, wherein
each of the projection members has a projection member height, a first projection member thickness, and a second projection member thickness, and the projection members have a ratio of the first projection member thickness to the second projection member thickness of 1:1 to 20:1.

4. The chromatographic bed insert of claim 3, wherein
each of the projection members has a ratio of the first projection member thickness to the projection member height of 1:2 to 1:20.

5. The chromatographic bed insert of claim 1, wherein
the base comprises a plurality of base members positioned such that the base has the openings.

6. The chromatographic bed insert of claim 5, wherein
the base members comprise a raised edge oriented in a direction substantially similar to the projection members.

7. The chromatographic bed insert of claim 1, wherein
the openings form a square grid.

8. The chromatographic bed insert of claim 1, wherein the openings form a hexagonal grid.

9. The chromatographic bed insert of claim 1, wherein
the projection members are positioned on the base such that the array of projection members forms a pattern which is radially symmetric.

10. The chromatographic bed insert of claim 7, wherein
the projection members are positioned on the base such that the array of projection members forms a square grid.

11. The chromatographic bed insert of claim 1, which comprises a plurality of layers each comprising the base and the array of projection members, wherein
the layers include a first layer positioned on a second layer and form a stack in which the base of the first layer is positioned on the array of the projection members of the second layer.

12. The chromatographic bed insert of claim 11, wherein
a second array of projection members associated with the second layer is aligned with a first array of projection members associated with the first layer.

13. The chromatographic bed insert of claim 11, wherein
the first layer includes a first base, the second layer includes a second base, and each of the projection members in the second layer comprises a first end connected to the first base and a second end connected to the second base.

14. A chromatographic device, comprising:
a chromatographic medium; and
a chromatographic bed insert of claim 1.

15. The chromatographic device of claim 14, wherein the chromatographic device has a corrected hydraulic radius (R_{HC}) defined as R_{HC}=(A-NAp)/(P+NPp), where A is the cross-sectional area normal to flow, P the wetted perimeter, Ap the cross-sectional area of a projection member, Pp its perimeter, and N the number of projection members, and wherein R_{HC} is less than 1 cm,
and the corresponding chromatographic device which does not comprise the chromatographic bed insert has R_{H} of at least 1 cm.

16. The chromatographic device of claim 14, wherein the chromatographic device has a corrected hydraulic radius (R_{HC}) defined as R_{HC}=(A-NAp)/(P+NPp), where A is the cross-sectional area normal to flow, P the wetted perimeter, Ap the cross-sectional area of a projection member, Pp its perimeter, and N the number of projection members, and wherein R_{HC} is less than 0.75 cm,
and the corresponding chromatographic device which does not comprise the chromatographic bed insert has R_{H} of 1 to 5 cm.

17. The chromatographic device of claim 14, wherein
the chromatographic medium comprises packed particles.

18. The chromatographic device of claim 17, wherein
the particles are at least one selected from the group consisting of a synthetic resin particle, a polysaccharide particle, and an inorganic material particle.

19. A method of chromatographically separating constituents of a liquid mixture, the method comprising:
passing the liquid mixture and an eluting solvent through a chromatographic device; and
collecting fractions comprising at least one selected from the group consisting of a constituent of the liquid mixture and the eluting solvent,
wherein the chromatographic device includes
a chromatographic medium; and
a chromatographic bed insert as claimed in claim 1.

## Patentansprüche

1. Chromatographischer Betteinsatz, der folgendes aufweist:
eine Basis, die eine Vielzahl Öffnungen aufweist; und
eine Anordnung von Vorsprungselementen, die an der Basis positioniert sind und im Wesentlichen senkrecht zu der Basis vorstehen, **dadurch gekennzeichnet, dass**
die Vielzahl Öffnungen ein Gitter oder ein radialsymmetrisches Muster bildet; und
die Anordnung von Vorsprungselementen an der Basis positioniert ist, sodass diese die vorliegenden Öffnungen nicht versperrt;
wobei
der chromatographische Betteinsatz ein Verdrängungsvolumen (%D) hat, das weniger als 50 % eines Volumens ist, das durch den chromatographischen Betteinsatz definiert ist, und
der chromatographische Betteinsatz konfiguriert ist, einen hydraulischen Radius (R_{H}) eines chromatographischen Bettes, das den chromatographischen Betteinsatz aufweist, durch mindestens 25 % zu reduzieren, im Vergleich zu einem korrespondierenden chromatographischen Bettes, das den chromatographischen Betteinsatz nicht aufweist.

2. Chromatographischer Betteinsatz nach Anspruch 1, wobei
die Vorsprungselemente ein freies Ende und ein fixiertes Ende, das mit der Basis verbunden ist, aufweisen.

3. Chromatographischer Betteinsatz nach Anspruch 1, wobei
jedes der Vorsprungselemente eine Vorsprungselementhöhe, eine erste Vorsprungselementdicke, und eine zweite Vorsprungselementdicke hat, und die Vorsprungselemente ein Verhältnis der ersten Vorsprungselementdicke zu der zweiten Vorsprungselementdicke von 1:1 bis 20:1 haben.

4. Chromatographischer Betteinsatz nach Anspruch 3, wobei
jedes der Vorsprungselemente ein Verhältnis der ersten Vorsprungselementdicke zu der Vorsprungselementhöhe von 1:2 bis 1:20 hat.

5. Chromatographischer Betteinsatz nach Anspruch 1, wobei
die Basis eine Vielzahl Basiselemente aufweist, die positioniert sind, sodass die Basis die Öffnungen hat.

6. Chromatographische Betteinsatz nach Anspruch 5, wobei
die Basiselemente einen erhöhten Rand aufweisen, der in eine Richtung ausgerichtet ist, die im Wesentlichen gleich zu den Vorsprungselementen ist.

7. Chromatographischer Betteinsatz nach Anspruch 1, wobei
die Öffnungen ein quadratisches Gitter bilden.

8. Chromatographischer Betteinsatz nach Anspruch 1, wobei
die Öffnungen ein hexagonales Gitter bilden.

9. Chromatographischer Betteinsatz nach Anspruch 1, wobei
die Vorsprungselemente auf der Basis positioniert sind, sodass die Anordnung der Vorsprungselemente ein Muster bildet, das radialsymmetrisch ist.

10. Chromatographischer Betteinsatz nach Anspruch 7, wobei
die Vorsprungselemente auf der Basis positioniert sind, sodass die Anordnung der Vorsprungselemente ein quadratisches Gitter bildet.

11. Chromatographischer Betteinsatz nach Anspruch 1, wobei dieser ferner eine Vielzahl von Schichten aufweist, wobei jede die Basis und die Anordnung der Vorsprungselemente aufweist, wobei
die Schichten eine erste Schicht umfassen, die an einer zweiten Schicht positioniert ist, und einen Stapel bilden, in dem die Basis der ersten Schicht an der Anordnung von Vorsprungselementen der zweiten Schicht positioniert ist.

12. Chromatographischer Betteinsatz nach Anspruch 11, wobei
eine zweite Anordnung von Vorsprungselementen, die mit der zweiten Schicht in Verbindung steht, mit einer ersten Anordnung von Vorsprungselementen ausgerichtet ist, die mit der ersten Schicht in Verbindung steht.

13. Chromatographischer Betteinsatz nach Anspruch 11, wobei
die erste Schicht eine erste Basis umfasst, die zweite Schicht eine zweite Basis umfasst, und jedes der Vorsprungselemente in der zweiten Schicht ein erstes Ende, das mit der ersten Basis verbunden ist, und ein zweites Ende umfasst, das mit der zweiten Basis verbunden ist.

14. Chromatographische Vorrichtung, die folgendes aufweist:
ein chromatographisches Medium; und
einen chromatographischen Betteinsatz nach Anspruch 1.

15. Chromatographische Vorrichtung nach Anspruch 14, wobei
die chromatographische Vorrichtung einen korrigierten hydraulischen Radius (R_{HC}) hat, der als R_{HC} = (A - NAp) / (P + NPp) definiert ist, wobei A die Querschnittsfläche senkrecht zur Strömung, P der benetzte Umfang, Ap die Querschnittsfläche eines Vorsprungselements, Pp dessen Umfang, und N die Anzahl von Vorsprungselementen ist, und wobei R_{HC} weniger als 1 cm ist, und
die korrespondierende chromatographische Vorrichtung, die nicht den chromatographischen Betteinsatz umfasst, einen R_{H} von mindestens 1 cm hat.

16. Chromatographische Vorrichtung nach Anspruch 14, wobei
die chromatographische Vorrichtung einen korrigierten hydraulischen Radius (R_{HC}) hat, der als R_{HC} = (A - NAp) / (P + NPp) definiert ist, wobei A die Querschnittsfläche senkrecht zur Strömung, P der benetzte Umfang, Ap die Querschnittsfläche eines Vorsprungselements, Pp dessen Umfang, und N die Anzahl von Vorsprungselementen ist, und wobei R_{HC} weniger als 0,75 cm ist, und
die korrespondierende chromatographische Vorrichtung, die nicht den chromatographischen Betteinsatz aufweist, ein R_{H} von 1 bis 5 cm hat.

17. Chromatographische Vorrichtung nach Anspruch 14, wobei
das chromatographische Medium verdichtete Partikel aufweist.

18. Chromatographische Vorrichtung nach Anspruch 17, wobei
die Partikel mindestens eines ausgewählt von der Gruppe bestehend aus einem synthetischen Harzpartikel, einem Polysaccharidpartikel, und einem nicht organischen Materialpartikel sind.

19. Verfahren zum chromatographischen Trennen von Bestandteilen einer Flüssigkeitsmischung, wobei das Verfahren folgendes aufweist:
Leiten der Flüssigkeitsmischung und eines Elutionsmittels durch eine chromatographische Vorrichtung; und
Sammeln von Anteilen, die mindestens eines ausgewählt von der Gruppe bestehend aus einem Bestandteil der Flüssigkeitsmischung und des Elutionsmittels aufweisen,
wobei die chromatographische Vorrichtung folgendes umfasst
ein chromatographisches Medium; und
einen chromatographischen Betteinsatz nach Anspruch 1.

## Revendications

1. Insert pour lit chromatographique, comprenant :
une base comprenant une pluralité d'ouvertures ; et
un réseau d'éléments saillants positionnés sur la base et faisant saillie de façon sensiblement perpendiculaire à la base, **caractérisé en ce que** la pluralité d'ouvertures forment une grille ou un motif radialement symétrique ; et le réseau d'éléments saillants est positionné sur la base de manière à ne pas obstruer les ouvertures présentes ;
dans lequel
l'insert pour lit chromatographique présente un volume de déplacement (%D) qui est inférieur à 50 % d'un volume défini par l'insert pour lit chromatographique, et
l'insert pour lit chromatographique est conçu pour réduire un rayon hydraulique (R_{H}) d'un lit chromatographique comprenant l'insert pour lit chromatographique d'au moins 25 % par rapport à un lit chromatographique correspondant qui ne comprend pas l'insert pour lit chromatographique.

2. Insert pour lit chromatographique de la revendication 1, dans lequel
les éléments saillants comprennent une extrémité libre et une extrémité fixe qui est reliée à la base.

3. Insert pour lit chromatographique de la revendication 1, dans lequel
chacun des éléments saillants présente une hauteur d'élément saillant, une première épaisseur d'élément saillant et une deuxième épaisseur d'élément saillant, et les éléments saillants présentent un rapport entre la première épaisseur d'élément saillant et la deuxième épaisseur d'élément saillant de 1:1 à 20:1.

4. Insert pour lit chromatographique de la revendication 3, dans lequel
chacun des éléments saillants présente un rapport entre la première épaisseur d'élément saillant et la deuxième épaisseur d'élément saillant de 1:2 à 1:20.

5. Insert pour lit chromatographique de la revendication 1, dans lequel
la base comprend une pluralité d'éléments de base positionnés de telle sorte que la base comporte les ouvertures.

6. Insert pour lit chromatographique de la revendication 5, dans lequel
les éléments de base comprennent un bord surélevé orienté dans une direction sensiblement similaire à celle des éléments saillants.

7. Insert pour lit chromatographique de la revendication 1, dans lequel
les ouvertures forment une grille carrée.

8. Insert pour lit chromatographique de la revendication 1, dans lequel les ouvertures forment une grille hexagonale.

9. Insert pour lit chromatographique de la revendication 1, dans lequel
les éléments saillants sont positionnés sur la base de telle sorte que le réseau d'éléments saillants forme un motif qui présente une symétrie radiale.

10. Insert pour lit chromatographique de la revendication 7, dans lequel
les éléments saillants sont positionnés sur la base de telle sorte que le réseau d'éléments saillants forme une grille carrée.

11. Insert pour lit chromatographique de la revendication 1, qui comprend une pluralité de couches comprenant chacune la base et le réseau d'éléments saillants,
dans lequel
les couches comportent une première couche positionnée sur une deuxième couche et forment un empilement dans lequel la base de la première couche est positionnée sur le réseau des éléments saillants de la deuxième couche.

12. Insert pour lit chromatographique de la revendication 11, dans lequel
un deuxième réseau d'éléments saillants associés à la deuxième couche est aligné avec un premier réseau d'éléments saillants associés à la première couche.

13. Insert pour lit chromatographique de la revendication 11, dans lequel
la première couche comporte une première base, la deuxième couche comporte une deuxième base, et chacun des éléments saillants dans la deuxième couche comprend une première extrémité reliée à la première base et une deuxième extrémité reliée à la deuxième base.

14. Dispositif chromatographique comprenant :
un milieu chromatographique ; et
un insert pour lit chromatographique de la revendication 1.

15. Dispositif chromatographique de la revendication 14, le dispositif chromatographique présentant un rayon hydraulique corrigé (R_{HC}) défini comme R_{HC}=(A-NAp)/(P+NPp), où A est l'aire de section transversale perpendiculaire à l'écoulement, P le périmètre mouillé, Ap l'aire de section transversale d'un élément saillant, Pp son périmètre, et N le nombre d'éléments saillants, et dans lequel R_{HC} est inférieur à 1 cm, et le dispositif chromatographique correspondant qui ne comprend pas l'insert pour lit chromatographique présente un R_{H} d'au moins 1 cm.

16. Dispositif chromatographique de la revendication 14, le dispositif chromatographique présentant un rayon hydraulique corrigé (R_{HC}) défini comme R_{HC}=(A-NAp)/(P+NPp), où A est l'aire de section transversale perpendiculaire à l'écoulement, P le périmètre mouillé, Ap l'aire de section transversale d'un élément saillant, Pp son périmètre, et N le nombre d'éléments saillants, et dans lequel R_{HC} est inférieur à 0,75 cm, et le dispositif chromatographique correspondant qui ne comprend pas l'insert pour lit chromatographique présente un R_{H} de 1 à 5 cm.

17. Dispositif chromatographique de la revendication 14, dans lequel
le milieu chromatographique comprend des particules tassées.

18. Dispositif chromatographique de la revendication 17, dans lequel
les particules en sont au moins une choisie dans le groupe constitué par une particule de résine synthétique, une particule de polysaccharide et une particule de matériau inorganique.

19. Procédé de séparation chromatographique de constituants d'un mélange liquide, le procédé comprenant :
le passage du mélange liquide et d'un solvant d'élution à travers un dispositif chromatographique ; et
la collecte de fractions comprenant au moins un élément choisi dans le groupe constitué par un constituant du mélange liquide et le solvant d'élution,
le dispositif chromatographique comportant
un milieu chromatographique ; et
un insert pour lit chromatographique selon la revendication 1.
